(19) Europäisches Patentamt
European Patent Office
Office européen des brevets

(11) Numéro de publication : **0 121 492 B1**

(12) **FASCICULE DE BREVET EUROPÉEN**

(45) Date de publication du fascicule du brevet : **15.06.88**

(51) Int. Cl.⁴ : **C 25 D 3/62**

(21) Numéro de dépôt : **84810065.7**

(22) Date de dépôt : **06.02.84**

(54) **Bain galvanique pour le dépôt electrolytique d'alliage or-cuivre-cadmium, procédé d'utilisation de ce bain, article résultant de ce procédé.**

(30) Priorité : **07.02.83 CH 682/83**
**10.06.83 CH 3180/83**

(43) Date de publication de la demande :
**10.10.84 Bulletin 84/41**

(45) Mention de la délivrance du brevet :
**15.06.88 Bulletin 88/24**

(84) Etats contractants désignés :
**CH DE FR GB LI**

(56) Documents cités :
**CH-A- 542 934**
**CH-A- 602 945**
**FR-A- 2 254 658**
**FR-A- 2 353 656**
**FR-A- 2 396 811**
**US-A- 3 084 111**

(73) Titulaire : **Emmenegger, Heinz**
**Rue du Locle 3a**
**CH-2300 La Chaux-de-Fonds (CH)**

(72) Inventeur : **Emmenegger, Heinz**
**Rue du Locle 3a**
**CH-2300 La Chaux-de-Fonds (CH)**

(74) Mandataire : **Dubois, Jean René et al**
**Bovard AG Patentanwälte VSP Optingenstrasse 16**
**CH-3000 Bern 25 (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue St-Denis, 75001 Paris, France

**Description**

Le dépôt électrolytique d'un alliage or-cuivre-cadmium a pris une grande importance, parce qu'il permet d'obtenir une couche brillante et ductile, bien que relativement épaisse d'alliage d'or dont la teinte peut varier du jaune pâle au rose, tout en conservant une teneur en or de 12 à 20 carats. Dans les dépôts électrolytiques d'alliages d'or, on a depuis longtemps utilisé l'alliage or-cuivre, avec en plus la présence d'un métal blanc pour apporter une teinte plus pâle, tirant sur le jaune. Actuellement, on admet que le cadmium possède les meilleures qualités électrochimiques requises pour être déposé en même temps que l'or et le cuivre.

De nombreux brevets décrivent des procédés relatifs à la déposition de cet alliage or-cuivre-cadmium, en particulier les brevets suisses 542 934 et 556 916 (Léa-Ronal) et 621 367 (Systèmes de Traitements de Surfaces) et américain 430 9256 (Aliprandini), qui représentent l'état actuel de la technique. Ils utilisent tous des bains cyanurés et contenant un complexe cyanuré de l'or, un complexe cyanuré du cuivre, du cyanure de potassium, un complexe organique du cadmium, assez stable pour exister en solution cyanurée, et un agent organique qui permet d'obtenir des dépôts brillants. Dans ces compositions de bains, deux agents chimiques contrôlent le mécanisme de la déposition : l'agent de complexation du cadmium et l'agent de brillance. En effet, si la déposition d'alliage or-cuivre s'effectue normalement à partir de complexes cyanurés de ces métaux, le cadmium doit nécessairement être obtenu à partir d'un complexe organique qui permet de stabiliser la teneur en cadmium de l'alliage déposé. Si on opérait avec un complexe cyanuré, sans agent chélatant, également pour le cadmium, on obtiendrait des dépôts blancs, cassants, ou alors, on devrait maintenir la teneur en cadmium du bain à des valeurs très basses, ce qui poserait pour celui-ci des problèmes de recharge et de longévité du bain. D'autre part, l'obtention d'un dépôt brillant, même pour des épaisseurs de plusieurs dizaines de microns est économiquement nécessaire. Il est donc important d'ajouter au bain électrolytique des agents de brillance, sinon le dépôt est mat et demande une opération de polissage, toujours coûteuse.

Les complexants utilisés pour régulariser la quantité de cadmium dans l'alliage or-cuivre-cadmium déposé électrolytiquement, sont le plus souvent des produits organiques solubles, dont la molécule contient un ou plusieurs atomes d'azote et des groupements carboxyliques acides qui assurent la solubilité. Ainsi lesdits brevets suisses 542 934 et 556 916 concernent l'emploi de l'acide éthylène-diaminetetra-acétique (EDTA) et de l'acide nitrilo-triacétique (NTA), ledit brevet américain 430 9256 concerne l'emploi uniquement de l'acide nitrilo-triacétique, alors que ledit brevet suisse 621 367 concerne l'utilisation de composés contenant de l'azote et des groupements propyliques carboxylés.

L'expérience montre que le NTA et l'EDTA complexent fortement de cadmium. De ce fait, les concentrations en cadmium et complexant doivent être tenues dans des limites assez strictes, ce qui ne permet pas une grande souplesse de conduite du bain. Si la concentration en complexant est trop faible, le dépôt devient trop pâle et si elle est trop forte, le dépôt devient rose, car le cadmium ne se dépose plus. L'alliage or-cuivre-cadmium est alors facilement attaqué par l'acide nitrique, ce qui n'est pas le cas pour un alliage correct. L'exposé du brevet suisse 621 367 (qui correspond à l'exposé FR-A-2 396 811) mentionne ces imperfections et propose d'y remédier par l'emploi d'un bain électrolytique aqueux contenant les métaux or, cuivre et cadmium sous forme de complexes cyanurés avec les métaux alcalins ou l'ammonium, du cyanure alcalin libre et travaillant à un pH de 9 à 11, qui contient, en outre au moins un complexant dont la molécule comporte plusieurs groupements propyle carboxylés. La constante de stabilité des complexes de cadmium de ces produits étant moins grande que celles du NTA et de l'EDTA, ces composés peuvent être présents dans le bain dans un intervalle de concentrations relativement large. Toutefois, des effets secondaires provoquent, lors de concentrations trop faibles, des dépôts cassants et d'une mauvaise homogénéité, alors qu'un excès se traduit par des dépôts piqués et des irrégularités d'épaisseurs.

Dans les documents antérieurs suivants : FR-A-2 353 656, FR-A-2 254 658, US-A-3 083 111, on décrit également des bains électrolytiques pour l'alliage d'or.

Dans FR-A-2 353 656, il est proposé d'utiliser des mouillants, des chélatants et complexants comme ingrédients.

L'exposé FR-A-2 254 658 décrit l'utilisation de l'acide N-hydroxyéthyliminodiacétique en tant que complexant pour le cadmium.

Selon US-A-3 083 111, on utilise des esters polyoxyalcoyléniques de l'acide phosphorique comme mouillants.

La présente invention a pour but de fournir un bain et un procédé de déposition d'alliage or-cuivre-cadmium permettant une plus grande facilité de conduite du bain que celle obtenue dans l'état actuel de la technique. Pour atteindre ce but, l'invention propose les bains électrolytiques selon les définitions des revendications 1 à 4. Ils contiennent des complexants dont la constante de stabilité est mieux adaptée à la déposition simultanée du cadmium, de l'or et du cuivre, que celle des complexants antérieurement connus. Il s'agit de complexants du type hydroxy-alkyl-amino-dicarboxyliques, de formule générale

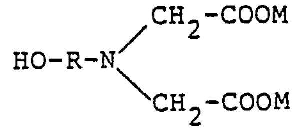

(I)

où R représente un groupe alkylène de 1 à 4 atomes de carbone et M des ions de sodium, potassium ou ammonium. La constante de stabilité de ces composés est de l'ordre de 9 lorsque R est un groupe méthyl, de 7,5 si R est un groupe éthyl, de 6,2 pour un groupe propyl et d'environ 5 pour un groupe butyl. La présence du groupement hydroxy semble particulièrement importante pour conférer à ces molécules une constante de stabilité favorable à la codéposition du cadmium avec l'or et le cuivre en milieu cyanuré. Le groupement d'acide carboxylé ne peut comporter plus de 2 atomes de carbone. Avec 3 atomes de carbone, la constante de stabilité est trop faible pour permettre une bonne codéposition du cadmium, en présence de cyanure de potassium. Alors que la marge de complexant, avec le NTA, est seulement de 4 à 6 g/l, et avec l'EDTA de 0,8 à 1,0 g/l pour obtenir un dépôt correct, les complexants présents dans le bain proposé par la présente invention et, en particulier, l'hydroxy-alkyl-imino-diacétate de sodium, potassium ou ammonium, peuvent être ajoutés avec une marge de manœuvre beaucoup plus grande, en quantités jusqu'à 10 fois plus importantes, sans altérer les qualités du dépôt d'alliage or-cuivre-cadmium, tant pour sa teinte que pour sa résistance à la corrosion.

Outre le complexant des ions cadmium, les bains de dépôt d'alliage or-cuivre-cadmium contiennent en général un produit qui permet l'obtention d'un dépôt brillant, même à fortes épaisseurs. On utilise, pour y parvenir, des molécules organiques qui agissent au niveau de la couche d'électrolyte la plus proche de la surface à recouvrir et qui influencent la diffusion des ions métalliques à travers celle-ci, en faisant varier la tension superficielle du liquide. Ces produits agissent de ce fait sur la cristallisation de l'alliage déposé. Les exposés précédemment mentionnés divulguent l'utilisation de l'ester phosphorique du produit de condensation du nonyl-phénol et d'une chaîne d'oxydes d'éthylène, corps chimiques dont la molécule comporte à la fois une chaîne aliphatique et un noyau benzénique ou l'utilisation de dérivé poly-oxy-alkylénique. Mais on a constaté que ces produits provoquent, dans l'alliage déposé, des irrégularités sous forme de piqûres ou cratères, sitôt que leur concentration dépasse une certaine valeur limite, ce qui ne permet de les utiliser que dans une marge étroite de concentrations.

C'est pourquoi le bain proposé par l'invention comprend aussi avantageusement, comme brillanteurs, dans le bain de déposition électrolytique d'alliage or-cuivre-cadmium, des produits dont la molécule ne comporte que des chaînes aliphatiques liées à un ester phosphoré d'une chaîne d'oxydes d'éthylène. En particulier, on utilise avec succès les produits déterminés par les formules générales suivantes :

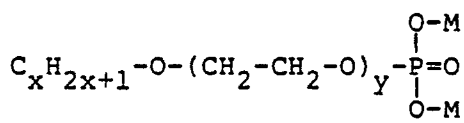

(III)

(monoester), et

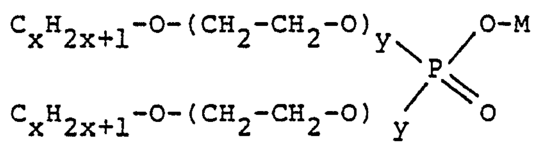

(IV)

(diester), où x représente un nombre compris entre 8 et 18 et y un nombre compris entre 6 et 15 et M des ions de sodium, potassium ou ammonium. Le poids moléculaire de ces divers composés est compris entre 600 et 800 pour les monoesters et entre 800 et 2 000 pour les diesters. Les chaînes alkyl présentes peuvent être droites ou ramifiées (iso).

Ces produits à chaîne aliphatique sont beaucoup mieux tolérés par les constituants du bain que ceux dont la molécule contient un noyau benzénique et on peut, de ce fait, en utiliser des concentrations cinq à dix fois plus élevées, sous forme de sels de sodium, potassium ou ammonium, qui sont aisément solubles.

Selon la présente invention, on utilise alternativement un agent mouillant en tant que brillanteur du type amido-propyl-diméthyl-aminoxydes d'acides gras, déterminés par la formule générale suivante

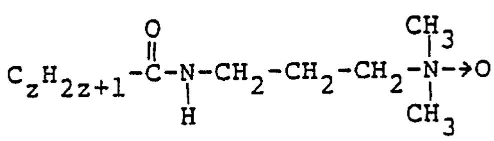

(II)

où z représente un nombre compris entre 11 et 17. Ces dérivés amidopropyl-diméthyl-aminoxydes d'acides gras sont beaucoup mieux tolérés par les constituants du bain que les composés poly-oxy-alkyléniques, de ce fait, on peut les utiliser en concentrations 10 à 20 fois plus élevées.

Les bains électrolytiques permettant le dépôt d'alliage or-cuivre-cadmium, selon la présente invention, s'utilisent de préférence à un pH de 9 à 11, avec une densité de courant de 0,6 à 1,5 A/dm$^2$ et à la température de 50° à 75 °C. Une agitation des pièces soumises à ce procédé est nécessaire pour permettre une répartition uniforme du courant et, par conséquent, une épaisseur uniforme du dépôt. Les concentrations de leurs divers constituants doivent se trouver dans un intervalle qui a été déterminé expérimentalement. Ainsi, l'or, sous forme de complexe cyanuré, doit être présent entre 1 et 20 g/l, de préférence entre 3 et 5 g/l, le cuivre, également sous forme de complexe cyanuré, de 7 à 70 g/l, de préférence de 40 à 65 g/l, et le cadmium, sous forme de cyanure, de sel inorganique, comme par exemple le sulfate, ou comme complexe organique, de 0,3 à 5 g/l, de préférence de 0,5 à 2,5 g/l. La concentration en cyanure de potassium libre peut varier de 3 à 40 g/l. La teneur en complexant organique du cadmium, plus spécialement en hydroxy-alkyl-imino-diacétate de sodium, potassium ou ammonium, peut varier de 5 à 100 g/l, préférablement de 7,5 à 20 g/l. Enfin, l'agent mouillant — brillanteur, sous forme d'ester phosphorique d'une chaîne d'oxydes d'éthylène de 6 à 15 carbones liée à un groupement alkyl de 8 à 18 carbones, de formule III ou IV, peut être présent dans les limites de 5 à 20 cm$^3$/l, de préférence de 5 à 7,5 cm$^3$/l et l'agent mouillant sous forme de dérivé du type amido-propyl-diméthyl-aminoxydes d'acides gras, peut être présent dans les limites de 0,1 à 50 ml/l. Pour augmenter la conductibilité du bain entre les électrodes, il est nécessaire d'ajouter des sels alcalins, tels que carbonates, borates ou phosphates, en quantités de 10 à 40 g/l, qui agissent également comme régularisateurs du pH.

Les exemples qui suivent illustrent plusieurs possibilités de déposition d'alliages or-cuivre-cadmium, de compositions différentes.

### Exemple n° 1

Composition du bain :

| | |
|---|---|
| Or, sous forme de complexe cyanuré | 4 g/l |
| Cuivre, sous forme de complexe cyanuré | 65 g/l |
| Cadmium, sous forme de cyanure | 1 g/l |
| Cyanure de potassium libre | 27 g/l |
| Sel de potassium de l'acide hydroxy-éthyl-imino-diacétique | 25 g/l |
| Mouillant (ester phosphoré d'une chaîne de 10 molécules d'oxyde d'éthylène liée à une chaîne alkyl de 8 carbones) | 5 ml/l |
| Phosphate dipotassique | 20 g/l |
| pH | 10,5 |

Une plaquette d'acier de 5 cm sur 2 cm a été plaquée dans ce bain, à une densité de courant de 0,75 A/dm$^2$, à 60 °C. Elle est recouverte d'un dépôt uniforme et brillant, rose pâle de couleur 4 N, qui a la composition suivante :

| | |
|---|---|
| Or | 55,4 % |
| Cuivre | 36,1 % soit 13,3 kt |
| Cadmium | 6,9 % |

En utilisant les complexants EDTA ou NTA, il ne serait pas possible d'obtenir un dépôt rose pâle 4 N dans ces conditions. On n'obtiendrait qu'un dépôt rouge avec un peu de cadmium.

### Exemple n° 2

Composition du bain :

| | |
|---|---|
| Or, sous forme de complexe cyanuré | 4 g/l |
| Cuivre, sous forme de complexe cyanuré | 65 g/l |
| Cadmium, sous forme de cyanure | 1,25 g/l |
| Sel de potassium de l'acide hydroxy-éthyl-imino-diacétique | 25 g/l |
| Cyanure de potassium libre | 27 g/l |
| Mouillant (ester phosphoré d'une chaîne de 10 molécules d'oxyde d'éthylène liée à une chaîne alkyl de 10 carbones | 5 ml/l |
| Phosphate dipotassique | 20 g/l |
| pH | 10,5 |

Une plaquette en acier de 5 cm sur 2 cm a également été plaquée dans ce bain, avec une densité de courant de 0,75 A/dm$^2$, à 60 °C. Elle est recouverte d'un dépôt rosé, de couleur 3 à 4 N, dont la composition est :

| | |
|---|---|
| Or | 62,1 % |
| Cuivre | 28 % soit 14,9 kt |
| Cadmium | 9,5 % |

Exemple n° 3

| | |
|---|---|
| Composition du bain : | |
| Or, sous forme de complexe cyanuré | 4 g/l |
| Cuivre, sous forme de complexe cyanuré | 65 g/l |
| Cadmium, sous forme de cyanure | 1,5 g/l |
| Sel de sodium de l'acide hydroxy-éthyl-imino-diacétique | 25 g/l |
| Cyanure de potassium libre | 27 g/l |
| Mouillant (ester phosphoré d'une chaîne de 10 molécules d'oxyde d'éthylène liée à une chaîne alkyl de 12 carbones) | 5 ml/l |
| ph (à corriger avec une solution d'acide phosphorique à 20 %) | 10 |

Une plaquette en acier de 5 cm sur 2 cm a été plaquée dans ce bain, à une densité de courant de 0,75 A/dm$^2$, à 60 °C, durant 30 minutes. Elle est recouverte d'un dépôt jaune, uniforme et brillant, de couleur 2 à 3 N, qui a la composition suivante :

| | |
|---|---|
| Or | 66 % |
| Cuivre | 23,5 % soit 16 kt |
| Cadmium | 10,5 % |

Exemple n° 4

| | |
|---|---|
| Composition du bain : | |
| Or, sous forme de complexe cyanuré | 4 g/l |
| Cuivre, sous forme de complexe cyanuré | 60 g/l |
| Cadmium, sous forme de cyanure | 1 g/l |
| Hydroxy-méthyl-imino-diacétate de sodium | 15 g/l |
| Mouillant (ester phosphoré d'une chaîne de 10 molécules d'oxyde d'éthylène liée à une chaîne alkyl de 8 à 10 carbones) | 1 ml/l |
| Cyanure de potassium libre | 30 g/l |
| Phosphate dipotassique | 20 g/l |
| pH | 10 |

Une plaquette d'acier de 5 cm sur 2 cm a été plaquée dans ce bain, à une densité de courant de 0,6 A/dm$^2$, à 55 °C. Elle est recouverte d'un dépôt très régulier, de couleur jaune 2 N 18, brillant, et de composition :

| | |
|---|---|
| Or | 75 % |
| Cuivre | 17 % soit 18 kt |
| Cadmium | 8 % |

Exemple n° 5

| | |
|---|---|
| Composition du bain : | |
| Or, sous forme de complexe cyanuré | 4 g/l |
| Cuivre, sous forme de complexe cyanuré | 70 g/l |
| Cadmium, sous forme de cyanure | 1 g/l |
| Hydroxy-éthyl-imino-diacétate de potassium | 10 g/l |
| Cyanure de potassium libre | 25 g/l |
| Mouillant (ester phosphoré d'une chaîne de 10 molécules d'oxyde d'éthylène liée à une chaîne alkyl de 8 carbones) | 5 ml/l |
| Phosphate dipotassique | 20 g/l |

Une plaquette d'acier de 5 cm sur 2 cm, traitée dans ce bain avec une densité de courant de 1 A/dm$^2$, à 58 °C, a été recouverte d'un dépôt d'alliage or-cuivre-cadmium jaune, homogène et brillant, à la vitesse de 10 microns en 20 minutes. Sa composition est :

| | |
|---|---|
| Or | 67 % |
| Cuivre | 23 % soit 16 kt |
| Cadmium | 10 % |

La pellicule d'alliage est particulièrement ductile. A ce sujet, il faut remarquer que dans l'état actuel de l'art, pour obtenir un dépôt jaune de 16 kt d'alliage or-cuivre-cadmium, il est nécessaire d'utiliser une concentration de 2,5 g/l d'ions cadmium et une densité de courant de 1,8 à 3,0 A/dm$^2$. Dans ces

conditions, le dépôt obtenu est jaune, mais cassant, du fait, semble-t-il, de la codéposition d'hydrogène à ces densités de courant relativement élevées.

Avec le procédé proposé, l'exemple n° 5 montre qu'il est possible d'obtenir un dépôt de 16 kt, jaune et bien ductile, avec une densité de courant de 1 A/dm² seulement et une teneur en ions cadmium dans le bain de 1 g/l seulement.

Exemple n° 6

Composition du bain :

| | |
|---|---|
| Or, sous forme de complexe cyanuré | 4 g/l |
| Cuivre, sous forme de complexe cyanuré | 50 g/l |
| Cadmium, sous forme de complexe cyanuré | 0,8 g/l |
| Sel de potassium de l'acide hydroxy-propyl-imino-diacétique | 25 g/l |
| Cyanure de potassium libre | 25 g/l |
| Mouillant (ester phosphoré d'une chaîne de 10 molécules d'oxyde d'éthylène liée à une chaîne alkyl de 10 carbones) | 5 ml/l |
| pH (à corriger avec une solution d'acide phosphorique à 20 %) | 10 |

L'essai a été fait en cellule de Hull, à 0,5 Amp, à 60 °C, pendant 10 minutes. La plaque est recouverte d'un dépôt allant du jaune pour les faibles densités de courant au rose pour les fortes densités de courant, uniformément brillant.

Exemple n° 7

Dans cet exemple, on utilise le même bain que dans l'exemple n° 6, mais avec une concentration en sel de potassium de l'acide hydroxy-propyl-imino-diacétique de 100 g/l, ce qui en quadruple la concentration.

L'essai a été fait en cellule de Hull à 0,5 Amp, à 60 °C, pendant 10 minutes. La plaque est recouverte d'un dépôt de couleurs similaires à celui obtenu dans l'exemple n° 6.

Exemple n° 8

Composition du bain :

| | |
|---|---|
| Or, sous forme de complexe cyanuré | 4 g/l |
| Cuivre, sous forme de complexe cyanuré | 65 g/l |
| Cadmium, sous forme de cyanure | 1 g/l |
| Cyanure de potassium libre | 27 g/l |
| Sel de potassium de l'acide hydroxy-éthyl-imino-diacétique | 25 g/l |
| Mouillant (amino-propyl-diméthyl-aminoxyde d'acides gras saturés, entre 11 et 17 carbones) | 5 ml/l |
| Carbonate de potassium | 20 g/l |
| pH | 10,5 |

Une plaquette d'acier de 5 cm sur 2 cm a été plaquée dans ce bain, à une densité de courant de 0,75 A/dm², à 60 °C. Elle est recouverte d'un dépôt uniforme et brillant, rose pâle de couleur 4 N, qui a la composition suivante :

| | |
|---|---|
| Or | 55,4 % |
| Cuivre | 36,1 % soit 13,3 carats |
| Cadmium | 6,9 % |

En utilisant les complexants NTA ou EDTA, il ne serait pas possible d'obtenir un dépôt rose pâle 4 N dans ces conditions. On n'obtiendrait qu'un dépôt rouge avec un peu de cadmium.

Exemple n° 9

Composition du bain :

| | |
|---|---|
| Or, sous forme de complexe cyanuré | 4 g/l |
| Cuivre, sous forme de complexe xyanuré | 65 g/l |
| Cadmium, sous forme de cyanure | 1,25 g/l |
| Sel de potassium de l'acide hydroxy-éthyl-imino-diacétique | 25 g/l |
| Cyanure de potassium libre | 27 g/l |
| Mouillant (amido-propyl-diméthyl-aminoxydes d'acides gras saturés, entre 11 et 17 carbones) | 5 ml/l |
| Phosphate dipotassique | 20 g/l |
| pH | 10,5 |

Une plaquette d'acier de 5 cm sur 2 cm a été plaquée dans ce bain, avec une densité de courant de 0,75 A/dm², à 60 °C. Elle est recouverte d'un dépôt rosé, de couleur 3 à 4 N, dont la composition est :

| | |
|---|---|
| Or | 62,1 % |
| Cuivre | 28 % soit 14,9 carats |
| Cadmium | 9,5 % |

Exemple n° 10

| | |
|---|---|
| Composition du bain : | |
| Or, sous forme de complexe cyanuré | 4 g/l |
| Cuivre, sous forme de complexe cyanuré | 60 g/l |
| Cadmium, sous forme de cyanure | 0,6 g/l |
| Sel de sodium de l'acide hydroxy-éthyl-imino-diacétique | 12 g/l |
| Cyanure de potassium libre | 25 g/l |
| Mouillant (amido-propyl-diméthyl-aminoxydes d'acides gras saturés, entre 11 et 17 carbones) | 4 ml/l |
| pH | 10,3 |

Une plaquette d'acier de 5 cm sur 2 cm a été plaquée dans ce bain, avec une densité de courant de 0,7 A/dm², à 55 °C. Elle est recouverte d'un dépôt jaune, de couleur 2 N 18, titrant 18 carats.

Exemple n° 11

| | |
|---|---|
| Composition du bain : | |
| Or, sous forme de complexe cyanuré | 4 g/l |
| Cuivre, sous forme de complexe cyanuré | 65 g/l |
| Cadmium, sous forme de cyanure | 1 g/l |
| Sel de sodium de l'acide hydroxy-éthyl-imino-diacétique | 12 g/l |
| Cyanure de potassium libre | 28 g/l |
| Mouillant (amido-propyl-diméthyl-aminoxydes d'acides gras saturés, entre 11 et 17 carbones) | 40 ml/l |
| pH | 10,3 |

On utilise ce bain pour plaquer des boîtes de montres en laiton, en travaillant une densité de courant de 1 A/dm², à 60 °C. On obtient un dépôt de 10 microns brillant, d'un alliage ductile titrant 16 carats, de composition :

| | |
|---|---|
| Or | 67 % |
| Cuivre | 23 % |
| Cadmium | 10 % |

Exemple n° 12

| | |
|---|---|
| Composition du bain : | |
| Or, sous forme de complexe cyanuré | 4 g/l |
| Cuivre, sous forme de complexe cyanuré | 60 g/l |
| Cadmium, sous forme de cyanure | 1 g/l |
| Sel de sodium de l'acide hydroxy-méthyl-imino-diacétique | 15 g/l |
| Cyanure de potassium libre | 30 g/l |
| Mouillant (amido-propyl-diméthyl-aminoxydes d'acides gras saturés, entre 11 et 17 carbones) | 2 ml/l |
| Borate de potassium | 20 g/l |
| pH | 10,0 |

Une plaquette d'acier de 5 cm sur 2 cm a été plaquée dans ce bain, à une densité de courant de 0,6 A/dm², à 55 °C. Elle est recouverte d'un dépôt très régulier, de couleur jaune 2 N 18, brillant, et de composition :

| | |
|---|---|
| Or | 75 % |
| Cuivre | 17 % soit 18 carats |
| Cadmium | 8 % |

Exemple n° 13

| | |
|---|---|
| Composition du bain : | |
| Or, sous forme de complexe cyanuré | 4 g/l |
| Cuivre, sous forme de complexe cyanuré | 65 g/l |
| Cadmium, sous forme de cyanure | 1 g/l |
| Sel de potassium de l'acide hydroxy-éthylimino-diacétique | 10 g/l |
| Cyanure de potassium libre | 27 g/l |
| Mouillant (amido-propyl-diméthyl-aminoxydes d'acides gras saturés, entre 11 et 17 carbones) | 20 ml/l |
| Phosphate dipotassique | 20 g/l |

Une plaquette d'acier de 5 cm sur 2 cm a été traitée dans ce bain, avec une densité de courant de 1 A/dm$^2$, à 58 °C. Elle est recouverte d'un dépôt d'alliage or-cuivre-cadmium jaune, homogène et brillant, à la vitesse de 10 microns en 20 minutes. Sa composition est :

| | |
|---|---|
| Or | 67 % |
| Cuivre | 23 % soit 16 carats |
| Cadmium | 10 % |

La pellicule d'alliage est particulièrement ductile. A ce sujet, il faut remarquer que dans l'état actuel de l'art, pour obtenir un dépôt jaune de 16 carats d'alliage or-cuivre-cadmium, il est nécessaire d'utiliser une concentration de 2,5 g/l d'ions cadmium et une densité de courant de 1,8 à 3,0 A/dm$^2$. Dans ces conditions, le dépôt obtenu est jaune, mais cassant, du fait, semble-t-il, de la codéposition d'hydrogène à ces densités de courant relativement élevées. Avec le procédé proposé, l'exemple 13 montre qu'il est possible d'obtenir un dépôt de 16 carats, jaune et bien ductile, avec une densité de courant de 1 A/dm$^2$ seulement, et une teneur en ions cadmium dans le bain de 1 g/l seulement.

Exemple n° 14

| | |
|---|---|
| Composition du bain : | |
| Or, sous forme de complexe cyanuré | 4 g/l |
| Cuivre, sous forme de complexe cyanuré | 50 g/l |
| Cadmium, sous forme de complexe cyanuré | 0,8 g/l |
| Sel de potassium de l'acide hydroxy-propyl-imino-diacétique | 25 g/l |
| Cyanure de potassium libre | 25 g/l |
| Mouillant (amido-propyl-diméthyl-aminoxydes d'acides gras saturés, entre 11 et 17 carbones) | 0,5 ml/l |
| pH (à corriger avec une solution d'acide phosphorique à 20 %). | 10,0 |

L'essai a été fait en cellule de Hull, à 0,5 Amp, à 60 °C, pendant 10 minutes. La plaque est recouverte d'un dépôt allant du jaune pour les faibles densités de courant au rose pour les fortes densités de courant, uniformément brillant.

Exemple n° 15

Composition du bain :

Dans cet exemple, on utilise le même bain que dans l'exemple n° 14, mais avec une concentration en sel de potassium de l'acide hydroxy-propyl-imino-diacétique de 100 g/l, ce qui en quadruple la concentration.

L'essai a été fait en cellule de Hull à 0,5 Amp, à 60 °C, pendant 10 minutes. La plaque est recouverte d'un dépôt de couleurs similaires à celui obtenu dans l'exemple n° 14.

On constate qu'en augmentant fortement la concentration du complexant utilisé dans cette invention, on ne fait varier que très peu la composition de l'alliage déposé, ce qui ne pourrait être le cas avec les complexants utilisés dans l'état actuel de l'art.

Ces exemples montrent que les complexants du cadmium, ainsi que les brillanteurs que contient le bain objet de la présente invention, permettent d'obtenir des dépôts réguliers, homogènes et brillants, d'alliages or-cuivre-cadmium pouvant aller de 12 à 20 carats et plus. La concentration des complexants du cadmium et des brillanteurs peut varier dans de larges mesures, sans affecter la qualité du dépôt, contrairement à ce qui se produit dans l'état actuel de l'art.

L'article traité dans le bain proposé, présenté à titre d'exemple comme étant une plaquette d'acier, peut naturellement être constitué de tout autre matériau conducteur, ou aussi d'un matériau isolant préalablement revêtu d'une couche conductrice.

Le bain galvanique selon l'invention et le procédé d'électroplastie qui l'utilise permettent l'obtention d'articles plaqués-or, en toutes formes et dimensions, la couche de placage, en or à 12-20 carats, selon le

dosage des constituants du bain, peut être économiquement mince, ou également suffisamment épaisse pour conférer à l'article des propriétés similaires à celles des articles, notamment de bijouterie, en or massif.

## Revendications

1. Bain galvanique pour le dépôt électrolytique d'alliage or-cuivre-cadmium, comprenant un complexe cyanuré d'or, un complexe cyanuré de cuivre, des ions cadmium et du cyanure de potassium libre, caractérisé en ce qu'il comprend, en outre, un agent complexant de formule générale

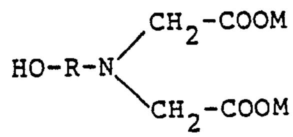 (I)

où R représente un groupement alkylène de 1 à 4 carbones et M des ions sodium, potassium ou ammonium, et un agent mouillant en tant que brillanteur sous forme d'un ou d'un mélange de plusieurs amido-propyl-diméthyl-aminoxydes d'acides gras, répondant à la formule générale

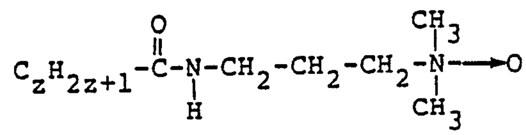 (II)

où z représente un nombre compris entre 11 et 17.

2. Bain selon la revendication 1, caractérisé en ce que ledit agent complexant de formule I est choisi parmi les sels de sodium, de potassium ou d'ammonium, des acides hydroxyméthyl-imino-diacétique, hydroxy-éthyl-imino-diacétique, hydroxy-propyl-imino-diacétique et hydroxy-butyl-imino-diacétique.

3. Bain selon l'une des revendications 1 ou 2, caractérisé en ce qu'il contient 1 à 20 g/l d'or, de 6 à 70 g/l de cuivre, de 0,3 à 5 g/l de cadmium, de 3 à 50 g/l de cyanure de potassium libre, de 0,1 à 50 g/l dudit agent mouillant en tant que brillanteur de 5 à 100 g/l de complexant de formule I et dont le pH se situe entre 9 et 11.

4. Bain galvanique pour le dépôt électrolytique d'alliage or-cuivre-cadmium, comprenant un complexe cyanuré d'or, un complexe cyanuré de cuivre, des ions cadmium et du cyanure de potassium libre, caractérisé en ce qu'il comprend, en outre, un agent complexant de formule générale

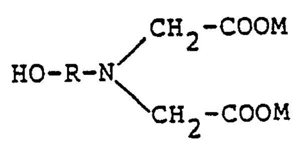 (I)

où R représente un groupement alkylène de 1 à 4 carbones et M des ions sodium, potassium ou ammonium et un agent mouillant en tant que brillanteur sous forme d'un produit organique dont la molécule est constituée par un sel soluble d'un ester ou d'un diester phosphoré d'une chaîne d'oxydes d'éthylène, liée à un groupe alkyl, de formules générales :

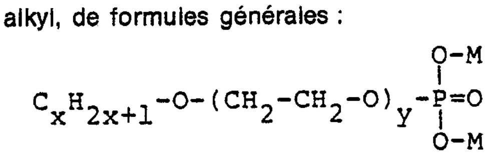 (III)

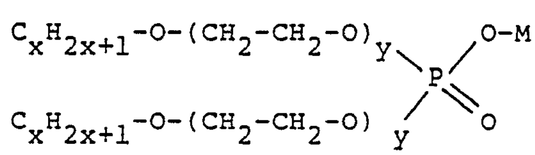 (IV)

où x représente un nombre compris entre 8 et 18, y un nombre compris entre 6 et 15 et M des ions sodium, potassium ou ammonium.

5. Bain selon la revendication 4, caractérisé en ce que l'agent mouillant en tant que brillanteur est un monoester d'un phosphate d'un polyglycol-éther d'alkyl de formule III et a un poids moléculaire compris entre 600 et 800.

6. Bain selon la revendication 4, caractérisé en ce que l'agent mouillant en tant que brillanteur de formule III ou IV, possède un groupe alkyl avec une chaîne droite ou ramifiée et un nombre de carbones compris entre 8 et 15.

7. Procédé d'utilisation du bain selon l'une des revendications 1 à 6, caractérisé en ce qu'on utilise ce bain en dosant les composants or-cuivre-cadmium, et le complexant de façon que le passage d'un courant galvanique provoque un dépôt cathodique d'or ou d'alliage d'or à 12-20 carats.

**Claims**

1. An electroplating solution for the electrolytic deposition of a gold-copper-cadmium alloy, comprising a complex gold cyanide, a complex copper cyanide, cadmium ions, and free potassium cyanide characterised in that it is composed, in addition, of a complexing agent of the general formula

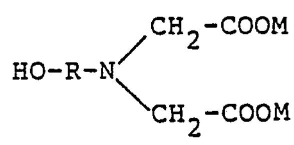

(I)

where R signifies an alkylene group having 1 to 4 carbon atoms and M signifies sodium, potassium or ammonium ions and a wetting agent as a brightener in the form of one or a mixture of several amidopropyldimethylaminoxides of fatty acids of the general formula

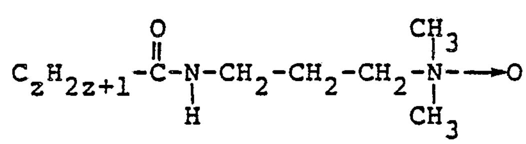

(II)

where z signifies a number between 11 and 17.

2. Solution according to claim 1, characterised in that the said complexing agent of formula I is chosen from amongst the sodium, potassium or ammonium salts, hydroxymethylimino diacetic acid, hydroxyethylimino diacetic acid, hydroxypropylimino diacetic acid, and hydroxybutylimino diacetic acid.

3. Solution according to one of the claims 1 or 2, characterised in that it contains 1-20 g/liter of gold, from 6-70 g/liter of copper, 0.3-5 g/liter of cadmium, 3-50 g/liter of free potassium cyanide, from 0.1-50 g/liter of the said wetting agent as a brightener, from 5-100 g/liter of the complexing agent of formula I, and the pH of which is between 9 and 11.

4. Electroplating solution for electrolytic deposition of a gold-copper-cadmium alloy, comprising a complex gold cyanide, a complex copper cyanide, cadmium ions, free potassium cyanide, characterised in that it comprises, in addition, a complexing agent of the general formula

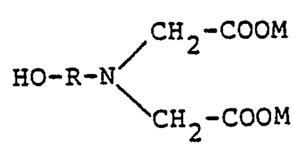

(I)

where R signifies an alkylene group having 1 to 4 carbon atoms and M signifies sodium, potassium or ammonium ions and a wetting agent as a brightener in the form of an organic product having a molecule composed of a soluble salt of a phosphoric ester or diester of a chain of ethylene oxides bonded to an alkyl group, of the general formulae :

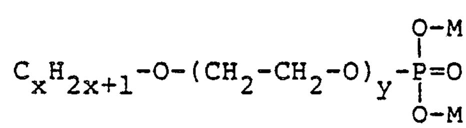

(III)

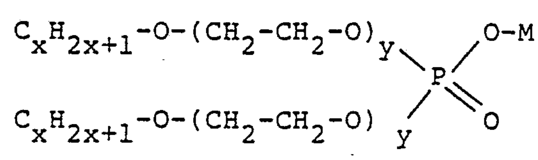

(IV)

where x signifies a number between 8 and 18, y signifies a number between 6 and 15, and M signifies sodium, potassium, or ammonium ions.

5. Solution according to claim 4, characterised in that the wetting agent as a brightener is a monoester of an alkyl polyglycol ether phosphate of formula III and has a molecular weight of between 600 and 800.

6. Solution according to claim 4, characterised in that the wetting agent as a brightener from formula III or IV, has an alkyl group with a straight or branched chain and between 8 and 15 carbon atoms.

7. A method of using this solution according to one of claims 1 to 6, characterised in that the solution is used by proportioning the gold-copper-cadmium components, and the complexing agent so that the passage of an electroplating current causes a cathodic gold or gold alloy deposit of 12-20 carats.

**Patentansprüche**

1. Galvanisches Bad für das Elektroplattieren einer Gold-Kupfer-Kadmium-Legierung, enthaltend einen Gold-cyanid-Komplex, einen Kupfercyanid-Komplex, Kadmiumionen und freies Kaliumcyanid, dadurch gekennzeichnet, dass es ausserdem ein Komplexierungsmittel der allgemeinen Formel

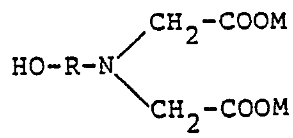

(I)

worin R eine Alkylengruppe mit 1-4 Kohlenstoffatomen bedeutet und M Natrium-, Kalium- oder Ammoniumionen bedeuten und ein Netzmittel als Glanzmittel in Form eines oder einer Mischung von mehreren Amido-propyl-dimethyl-aminooxiden von Fettsäuren der allgemeinen Formel

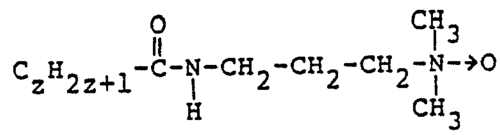

(II)

worin z eine Zahl zwischen 11 und 17 inklusive bedeutet, enthält.

2. Bad gemäss Anspruch 1, dadurch gekennzeichnet, dass das genannte Komplexierungsmittel der Formel I ausgewählt ist aus Natrium-, Kalium- oder Ammoniumsalzen von Hydroxymethyl-imino-diessigsäure, Hydroxyethyl-imino-diessigsäure, Hydroxypropyl-imino-diessigsäure und Hydroxy-butyl-imino-diessigsäure.

3. Bad gemäss Anspruch 1 oder 2, dadurch gekennzeichnet, dass es 1 bis 20 g/l Gold, 6 bis 70 g/l Kupfer, 0,3 bis 5 g/l Kadmium, 3 bis 50 g/l freies Kaliumcyanid, 0,1 bis 50 g/l des genannten Netzmittels als Glanzmittel, 5 bis 100 g/l Komplexierungsmittel der Formel I, enthält und dass sich sein pH-Wert zwischen 9 und 11 befindet.

4. Galvanisches Bad für die Elektroplattierung einer Gold-Kupfer-Kadmium-Legierung, enthaltend einen Goldcyanid-Komplex, einen Kupfercyanid-Komplex, Kadmiumionen und freies Kaliumcyanid, dadurch gekennzeichnet, dass es ausserdem ein Komplexierungsmittel der allgemeinen Formel

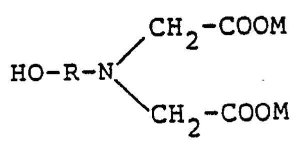

(I)

worin R eine Alkylengruppe mit 1-4 Kohlenstoffatomen bedeutet und M Natrium-, Kalium- und Ammonium ionen bedeuten und ein Netzmittel als Glanzmittel in Form eines organischen Erzeugnisses, dessen Moleküle aus einem löslichen Salz eines Phosphorsäureesters oder -diesters mit einer Ethylenoxidkette, die an eine Alkylgruppe gebunden ist, zusammensetzt, der allgemeinen Formeln

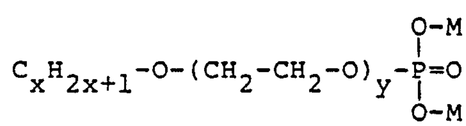

(III)

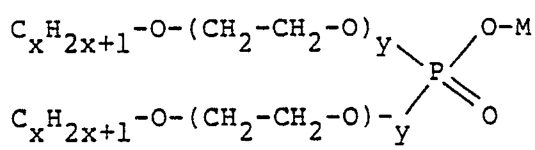

(IV)

worin x eine Zahl zwischen 8 und 18 inklusive bedeutet, y eine Zahl zwischen 6 und 15 inklusive bedeutet und M die Ionennatrium, Kalium und Ammonium bedeuten, enthält.

5. Bad gemäss Anspruch 4, dadurch gekennzeichnet, dass das als Glanzmittel dienende Netzmittel ein Monoester eines Polyglykol-alkylether-phosphonates der Formel III ist und ein Molekulargewicht zwischen 600 und 800 besitzt.

6. Bad gemäss Anspruch 4, dadurch gekennzeichnet, dass das als Glanzmittel dienende Netzmittel der Formeln III und IV eine gerad- oder verzweigtkettige Alkylgruppe und eine Kohlenstoffzahl zwischen 8 und 15 besitzt.

7. Verfahren zur Verwendung eines Bades gemäss einem der Ansprüche 1 bis 6, dadurch gekennzeichnet, dass man dieses Bad verwendet, indem man die Komponenten Gold-Kupfer-Kadmium und das Komplexierungsmittel in solcher Weise dosiert, dass das Anlegen eines galvanischen Stromes eine kathodische Ablagerung von Gold oder einer Goldlegierung, mit einem Gehalt von 12 bis 20 Karat ergibt.